# EUROPÄISCHE PATENTANMELDUNG

(11) **EP 4 167 471 A1**
(43) Veröffentlichungstag der Anmeldung: **19.04.2023**
(21) Anmeldenummer: 22197906.5
(22) Anmeldetag: 27.09.2022
(51) Int. Cl.: H02S 20/23

(54) **SOLAR-CARPORT**

(30) Priorität: 14.10.2021 DE 202021105573 U
(71) Anmelder: Sopago GmbH, 80796 München (DE)
(72) Erfinder: HÜBINGER-GRANER, Egon, 80796 München (DE)
(74) Vertreter: Maiwald GmbH

(57) **Zusammenfassung**

Die vorliegende Erfindung betrifft ein Solar-Carport 1 zum Unterstellen von mindestens einem Kraftfahrzeug. Das Solar-Carport 1 umfasst eine Trägereinheit 20 und einen von der Trägereinheit 20 gestützten Dachaufbau 10. Der Dachaufbau 10 weist einen Grundrahmen 12, 13 und mindestens ein Solarmodul 40 auf. Das Solarmodul 40 ist mit dem Grundrahmen 12, 13 mechanisch gekoppelt und die Trägereinheit 20 weist mindestens ein Schraubfundament 30 auf.

## Beschreibung

Die vorliegende Erfindung betrifft einen Solar-Carport zum Unterstellen von mindestens einem Kraftfahrzeug.

Ein Carport schützt ein Kraftfahrzeug vor witterungsbedingten Einflüssen und weist herkömmlich eine Stützkonstruktion auf, die fest mit dem Erdreich verankert ist. Auf der Stützkonstruktion liegt ein Dachaufbau auf, der das Kraftfahrzeug von oben vor Regen, Hagel, Schnee etc. schützt. Seitenwände sowie ein Zugangstor, wie bei einer Garage, sind gewöhnlich nicht vorgesehen.

Bei Solar-Carports kann die Dachfläche zur Stromerzeugung mittels Solarmodulen genutzt werden. Um beispielsweise ein elektrisch angetriebenes Kraftfahrzeug aufzuladen, kann ein Solar-Carport über einen elektrischen Ladeanschluss verfügen. Alternativ kann der erzeugte Strom auch wahlweise in das öffentliche Stromnetz eingespeist werden.

Die Stützkonstruktion des Carports ist in der Regel mit Betonfundamenten verbunden, die weit ins Erdreich verlaufen oder auch zum Teil aus dem Erdreich herausragen. Solche Betonfundamente verleihen der Stützkonstruktion und somit dem gesamten Carport die notwendige Stabilität.

Aufgabe der vorliegenden Erfindung ist es, einen verbesserten Solar-Carport bereitzustellen, dessen Aufbau an gewünschter Stelle sehr schnell und kostengünstig erfolgen kann, der beliebig modulartig erweiterbar ist und der an unterscheideliche Parkplatzbreiten flexible anpassbar ist.

Diese Aufgabe wird durch einen Solar-Carport gelöst, der in dem Schutzanspruch 1 angegeben ist. Optionale bzw. bevorzugte Merkmale der Erfindung sind Gegenstand der abhängigen Schutzansprüche.

Gemäß der Erfindung wird ein Solar-Carport zum Unterstellen von mindestens einem Kraftfahrzeug bereitgestellt, der eine Trägereinheit und einen von der Trägereinheit gestützten Dachaufbau umfasst. Erfindungsgemäß weist der Dachaufbau einen Grundrahmen und mindestens ein Solarmodul auf, das mit dem Grundrahmen mechanisch gekoppelt ist. Erfindungsgemäß weist die Trägereinheit mindestens ein Schraubfundament auf.

Bevorzugt ist der Dachaufbau zumindest abschnittsweise geneigt.

Noch bevorzugter weist der Dachaufbau mindestens einen satteldachförmigen Abschnitt auf.

Weiterhin bevorzugt ist das Solarmodul gegenüber dem Grundrahmen geneigt angeordnet.

Gemäß einer bevorzugten Ausführungsform der Erfindung weist der Grundrahmen des Dachaufbaus mindestens ein Längsprofil, das sich im Falle eines unter dem Solar-Carport untergestellten Kraftfahrzeuges in Kraftfahrzeuglängsachse erstreckt, und mindestens ein Querprofil, das sich im Falle eines unter dem Solar-Carport untergestellten Kraftfahrzeuges senkrecht zur Kraftfahrzeuglängsachse erstreckt, auf.

Vorzugsweise sind das Längsprofil und das Querprofil aus Holz gefertigt.

Vorteilhaft ist es, wenn auf einer Oberseite des Grundrahmens ein Netz angebracht ist, das sich über die gesamte Länge und Breite des Grundrahmens erstreckt.

Vorzugsweise weist die Trägereinheit vertikal verlaufende Stützsäulen, horizontal verlaufende Längsträger und horizontal verlaufende Querträger auf, wobei die Längsträger und die Querträger in Wirkverbindung mit den Stützsäulen stehen.

Noch bevorzugter ist jede Stützsäule mit einem Schraubfundament versehen.

Weiterhin bevorzugt können unter den Solar-Carport zwei, vier, sechs oder acht Kraftfahrzeuge, wahlweise Tür-an-Tür nebeneinander und/oder Front-an-Heck hintereinander, untergestellt werden.

Nachstehend wird die vorliegende Erfindung anhand einer bevorzugten Ausführungsform in Verbindung mit den beigefügten Zeichnungen näher erläutert. Es zeigen schematisch:
- Fig. 1: eine perspektivische Ansicht eines Solar-Carports gemäß einer bevorzugten Ausführungsform der Erfindung;
- Fig. 2: den Dachaufbau des in Fig. 1 gezeigten Solar-Carports;
- Fig. 3: die Trägereinheit des in Fig. 1 gezeigten Solar-Carports; und
- Fig. 4: ein Schraubfundament, mit dem die in Fig. 3 gezeigte Trägereinheit fest mit dem Erdreich verbunden werden kann.

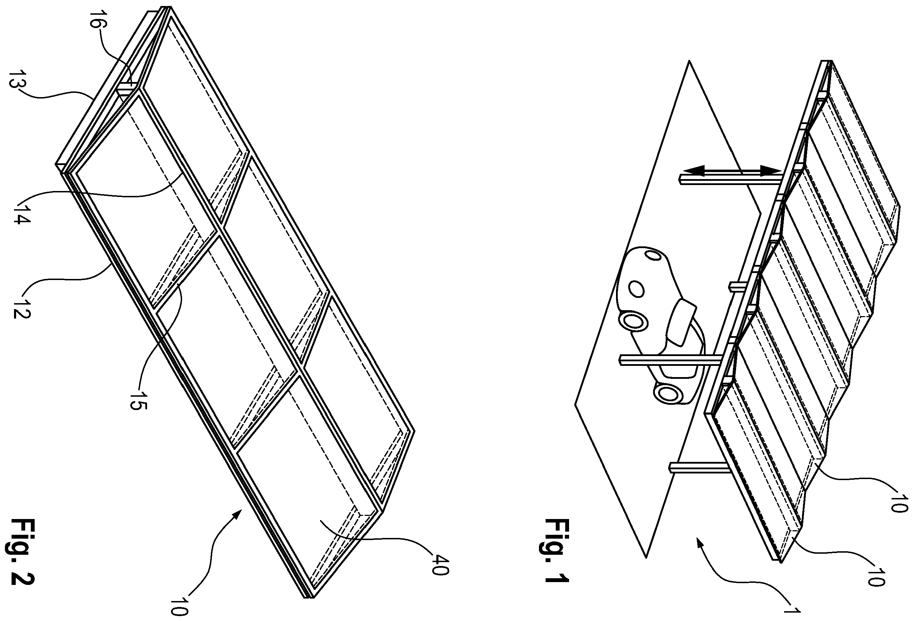

Fig. 1 zeigt eine perspektivische Ansicht eines Solar-Carports 1 gemäß einer bevorzugten Ausführungsform der Erfindung. Der Solar-Carport 1 ist in diesem Fall so bemessen, dass insgesamt vier Kraftfahrzeuge darin untergestellt werden können. Der Abstand zwischen dem Erdreich und dem Dachaufbau 10 kann wahlweise variiert werden, wodurch auch Kraftfahrzeuge mit höherem Aufbau, beispielsweise Wohnmobile, unter dem Solar-Carport 1 untergestellt werden können. Ebenso kann wahlweise die Stellplatzbreite für die Kraftfahrzeuge verändert werden, indem die Breite des Dachaufbaus entsprechend variiert wird.

Im folgenden bezieht sich der Begriff "Längs" auf die Längsachse des unter dem Solar-Carport 1 untergestellten Kraftfahrzeuges, während der Begriff "Quer" eine Richtung angibt, die senkrecht zur Längsachse des unter dem Solar-Carport 1 untergestellten Kraftfahrzeuges verläuft.

Fig. 2 zeigt den Dachaufbau 10 des in Fig. 1 dargestellten Solar-Carports 1. Die in Fig. 2 dargestellte Form des Dachaufbaus 10 ist der eines Satteldachs nachempfunden. Zu diesem Zweck weist der Dachaufbau 10 einen Grundrahmen 12, 13 auf, der vorzugsweise aus zwei in einem Abstand zueinander angeordnete Längsträger 12 und mehreren in einem Abstand zueinander angeordneten Querträgern 13 gebildet ist. Vorzugsweise sind die Längsträger 12 und die Querträger 13 aus Holz gefertigt. Im Sinne der Erfindung können die Längsträger 12 und die Querträger 13 auch aus einem anderen Material gefertigt sein, beispielsweise aus Stahl oder auch aus Aluminium.

Oberhalb des Grundrahmens 12, 13 ist eine Rahmeneinheit 14, 15 angeordnet und mit dem Grundrahmen 12, 13 befestigt. Die Rahmeneinheit 14, 15 ist in einem vorbestimmten spitzen Winkel zum Grundrahmen 12, 13 angeordnet. Die Rahmeneinheit 14, 15 weist Längsprofile 14 und Querprofile 15 auf. Zwischen jeweils einem Längsprofil 14 und jeweils einem Querprofil 15 ist ein Solarmodul 40 eingesetzt. Das Solarmodul 40 wird mithilfe einer Klemme (nicht dargestellt) in der Rahmeneinheit 14, 15 gehalten. Vorzugsweise gibt es keine Dichtung zwischen dem Solarmodul 40 und dem entsprechenden Querprofil 15 und dem entsprechenden Längsprofil 14, wodurch der gesamte Dachaufbau 10 regenundicht ist.

Die Anzahl der Solarmodule 40 kann pro Dachaufbau 10 je nach Größe der Solarmodule 40 variieren. Im hier gezeigten bevorzugten Ausführungsbeispiel sind insgesamt sechs Solarmodule 40 pro Dachaufbau 10 vorgesehen.

Die Rahmeneinheit 14, 15 ist bei der hier gezeigten bevorzugten Ausführungsform gegenüber dem Grundrahmen 12, 13 geneigt angeordnet. Dies wird mithilfe von Stützelementen 16 erreicht, die auf dem Grundrahmen 12, 13 aufgelagert sind. Vorzugsweise kann die Rahmeneinheit zusätzlich zu den Längs- und Querprofilen 14, 15 noch in Querrichtung und horizontal verlaufende Versteifungselemente aufweisen, die mit den am äußersten Rand des Dachaufbaus 10 angeordneten Längsprofilen 14 verbunden sind.

Auf der Oberseite des Grundrahmens 12, 13 ist vorzugsweise ein Netz (nicht gezeigt) aufgebracht, das sich bevorzugt über die gesamt Länge und Breite des Grundrahmens 12, 13 erstreckt. Das Netz ist bevorzugt ein feinmaschiges Sicherheitsnetz, das bevorzugt aus Kunststoff gefertigt ist und das Glasbruchstücke auffangen soll für den Fall, dass eine Glasscheibe eines oder gar mehrerer Solarmodule 40 zerbrechen sollte.

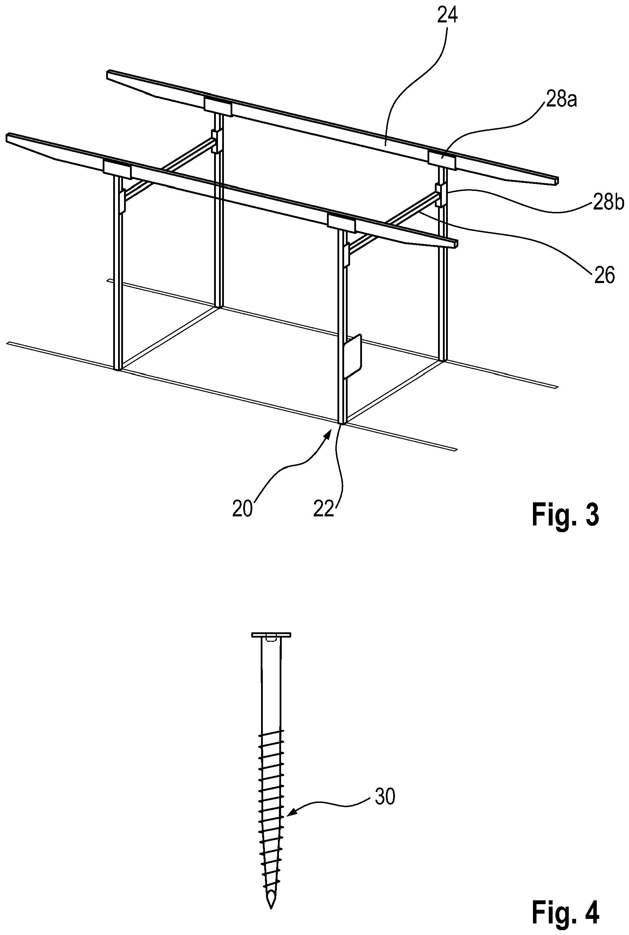

Fig. 3 zeigt die Trägereinheit 20 des in Fig. 1 dargestellten Solar-Carports 1. Die Trägereinheit 20 umfasst vertikal verlaufende Stützsäulen 22 sowie horizontal verlaufende Längsträger 24 und Querträger 26. Während die Stützsäulen 22 und die Querträger 26 bevorzugt aus Stahl hergestellt sind, sind die Längsträger 24 vorzugsweise aus Holz gefertigt. Je nach gewünschter Größe des Solar-Carports 1 kann die Länge der Längsträger 24 sowie deren Abstand in Querrichtung zueinander verändert werden. Über entsprechende Verbindungsprofile 28a sind die Längsträger 24 mit den Stützsäulen 22 verbunden, während die Querträger 26 mittels entsprechend ausgebildeter Verbindungsprofile 28b mit den Stützsäulen 22 verbunden sind.

Gemäß der Erfindung ist mindestens eine Stützsäule 22 mit einem in Fig. 4 dargestellten Schraubfundament 30 verbunden. Vorzugsweise sind alle Stützsäulen 22 mit einem Schraubfundament 30 versehen. Das in Fig. 4 dargestellte Schraubfundament 30 weist eine Länge auf, die im Bereich zwischen 1,50 m bis 2,20 m liegt. Das Schraubfundament 30 wird in das Erdreich geschraubt und bietet eine hinreichende Festigkeit für die Verankerung der Stützsäulen 22. Die Stützsäulen 22 werden dabei lediglich an die Schraubfundamente 30 angeflanscht und über eine Schraubverbindung mit diesen verbunden.

Der Solar-Carport gemäß der Erfindung bietet den Vorteil, dass dieses schnell am erwünschten Ort ohne aufwendige Fundamentarbeiten, wie dies beispielsweise bei im Erdreich eingebrachten Betonfundamenten notwendig ist, aufgestellt werden kann. Des Weiteren ist die Breite und die Tiefe des Solar-Carports leicht veränderbar, da der Grundrahmen auf einfache Weise an die erwünschte Größe angepasst werden kann. Zudem kann der gesamte Solar-Carport vorgefertigt werden, was die für die Aufstellung des Solar-Carports benötigte Montagezeit erheblich verkürzt. Da das Solarmodul das eigentliche Dach des Solar-Carports bildet, sind keine weiteren Dachelemente für den Dachaufbau notwendig.

Erfindungsgemäß können Solar-Carports bereitgestellt werden, die für zwei, vier, sechs, acht oder mehr Kraftfahrzeuge geeignet sind. Die Kraftfahrzeuge können dabei nebeneinander, das heißt Tür-an-Tür, oder auch hintereinander, das heißt Front-an-Heck, unter den Solar-Carport untergestellt werden.

Der erfindungsgemäße Solar-Carport eignet sich insbesondere für öffentliche Stellplätze, beispielsweise im Bereich von Supermärkten, Flughäfen, Krankenhäusern oder auch Erlebnisparks, die durch den erfindungsgemäßen Solar-Carport zur Stromerzeugung genutzt werden können. Da keine großen Erdarbeiten zur Einbringung von Fundamenten nötig sind, können solche Flächen auf kostengünstige und effiziente Weise zur alternativen Energiegewinnung beitragen. Gerade an Flughäfen oder Erlebnisparks, wo die Parkdauer gewöhnlich länger als in Kurzzeitparkzonen in Innenstädten ist, können Elektromobile beziehungsweise elektrifizierte Kraftfahrzeuge mittels des durch die Solarmodule erzeugten Stroms aufgeladen werden.

## Patentansprüche

1. Solar-Carport (1) zum Unterstellen von mindestens einem Kraftfahrzeug, umfassend eine Trägereinheit (20) und einen von der Trägereinheit (20) gestützten Dachaufbau (10), wobei der Dachaufbau (10) einen Grundrahmen (12, 13) und mindestens ein Solarmodul (40) aufweist, und wobei das Solarmodul (40) mit dem Grundrahmen (12, 13) mechanisch gekoppelt ist, und wobei die Trägereinheit (20) mindestens ein Schraubfundament (30) aufweist.

2. Solar-Carport (1) nach Anspruch 1, wobei der Dachaufbau (10) zumindest abschnittsweise geneigt ist.

3. Solar-Carport (1) nach Anspruch 1 oder 2, wobei der Dachaufbau mindestens einen satteldachförmigen Abschnitt (10) aufweist.

4. Solar-Carport (1) nach einem der vorhergehenden Ansprüche, wobei das Solarmodul (40) gegenüber dem Grundrahmen (12, 13) geneigt angeordnet ist.

5. Solar-Carport (1) nach einem der vorhergehenden Ansprüche, wobei der Grundrahmen (12, 13) des Dachaufbaus (10) mindestens ein Längsprofil (12), das sich im Falle eines unter dem Solar-Carport (1) untergestellten Kraftfahrzeuges in Kraftfahrzeuglängsachse erstreckt, und mindestens ein Querprofil (13), das sich im Falle eines unter dem Solar-Carport (1) untergestellten Kraftfahrzeuges senkrecht zur Kraftfahrzeuglängsachse erstreckt, aufweist.

6. Solar-Carport nach Anspruch 5, wobei das Längsprofil (12) und das Querprofil (13) aus Holz gefertigt sind.

7. Solar-Carport (1) nach einem der vorhergehenden Ansprüche, wobei auf einer Oberseite des Grundrahmens (12, 13) ein Netz angebracht ist, das sich über die gesamte Länge und Breite des Grundrahmens (12, 13) erstreckt.

8. Solar-Carport (1) nach einem der vorhergehenden Ansprüche, wobei die Trägereinheit (20) vertikal verlaufende Stützsäulen (22), horizontal verlaufende Längsträger (24) und horizontal verlaufende Querträger (26) aufweist, und wobei die Längsträger (24) und die Querträger (26) in Wirkverbindung mit den Stützsäulen (22) stehen.

9. Solar-Carport (1) nach Anspruch 8, wobei jede Stützsäule (22) mit einem Schraubfundament (30) versehen ist.

10. Solar-Carport (1) nach einem der vorhergehenden Ansprüche, wobei unter den Solar-Carport (1) zwei, vier, sechs oder acht Kraftfahrzeuge, wahlweise Tür-an-Tür nebeneinander und/oder Front-an-Heck hintereinander, untergestellt werden können.
